# EUROPÄISCHE PATENTSCHRIFT

(11) **EP 2 054 612 B1**
(45) Veröffentlichungstag und Bekanntmachung des Hinweises auf die Patenterteilung: **01.06.2016**
(21) Anmeldenummer: 07802776.0
(22) Anmeldetag: 22.08.2007
(51) Int. Cl.: F24F 3/16

(54) **KRAFTSTOFFFILTER**
FUEL FILTER
FILTRE À CARBURANT

(30) Priorität: 23.08.2006 DE 102006039581
(43) Veröffentlichungstag der Anmeldung: 06.05.2009
(73) Patentinhaber: MAHLE International GmbH, 70376 Stuttgart (DE)
(72) Erfinder: GÄNSWEIN, Matthias, 73732 Esslingen (DE); KOPPI, Peter, A-9400 Wolfsberg (AT); KÜSGENS, Pia, 70193 Stuttgart (DE); SIEGLE, Sven, 71364 Winnenden (DE)
(74) Vertreter: BRP Renaud & Partner mbB Rechtsanwälte Patentanwälte Steuerberater
(86) Internationale Anmeldenummer: PCT/EP2007/058703
(87) Internationale Veröffentlichungsnummer: WO 2008/023029

(56) Entgegenhaltungen:
- DE-A1- 10 160 497
- DE-A1- 10 350 781
- DE-A1-102004 036 070
- DE-U1-202005 015 596

## Beschreibung

Die Erfindung betrifft ein Kraftstofffilter mit einem Filterelement zum Abscheiden von Partikeln und Wasser aus einem durch den Kraftstofffilter strömenden Kraftstoffstrom gemäß dem Oberbegriff des Anspruchs 1.

Um einen möglichst hohen Wirkungsgrad des Verbrennungsmotors erzielen zu können, ist in einer Kraftstoffleitung üblicherweise ein Kraftstofffilter angeordnet, welches insbesondere Schmutzteilchen aus dem Kraftstoff herausfiltert und im Kraftstoff mitgeführtes Wasser abscheidet. Da hierbei nicht gänzlich ausgeschlossen werden kann, dass in dem aus dem Kraftstoff abgeschiedenen Wasser noch Kraftstoffanteile enthalten sind, kann dieses nicht ohne weiteres in die Umgebung abgelassen werden, sondern muss von darin noch enthaltenen Kraftstoffanteilen getrennt werden.

Eine Möglichkeit der Abscheidung von im abgeschiedenen Wasser noch enthaltenen Kraftstoffanteilen, ist aus der DE 10 2005 000 658.2 A1 bekannt, in welcher ein Kraftstofffilter mit einem Filterelement zum Herausfiltern von Partikeln und Wasser aus einem durch den Kraftstofffilter strömenden Kraftstoffstrom und einem Entwässerer zum Abführen des herausgefilterten Wassers aus dem Kraftstofffilter beschrieben ist. Dabei ist der Entwässerer als eigenständige Baueinheit gestaltet und kann wahlweise von dem Filterelement getrennt werden. Im Entwässerer ist eine für Wasser semipermeable Membran vorgesehen, welche auf einem Träger flächig aufliegt und welche einen Durchtritt von Kraftstoffanteilen verhindert. Die Trennung von noch im abgeschiedenen Wasser enthaltenen Kraftstoffanteilen erfolgt dabei über die semipermeable Membran.

Aus der DE 101 60 497 A1 ist ein Kraftstofffilter mit einem Filterelement zum Abscheiden von Partikeln und Wasser aus einem durch den Kraftstofffilter strömenden Kraftstoffstrom bekannt. Das Kraftstofffilter weist einen Sammelraum zum Sammeln des abgeschiedenen Wassers sowie einen Entwässerer zum Abführen des abgeschiedenen Wassers aus dem Kraftstofffilter auf, wobei der Entwässerer als zum Kraftstofffilter separate Baugruppe ausgebildet ist. Im Entwässerer ist ein Kohlenwasserstoffadsorber zur Absorption von in dem abgeschiedenen Wasser mitgeführten Kohlenwasserstoffen vorgesehen.

Aus der DE 103 50 781 A1 ist ebenfalls ein Kraftstofffilter mit einem Filterelement zum Abscheiden von Partikeln und Wasser aus einem durch den Kraftstofffilter strömenden Kraftstoffstrom bekannt. Im unteren Bereich des Gehäuses des Kraftstofffilters sind ein Sammelraum zum Sammeln des abgeschiedenen Wassers sowie ein darunter angeordneter Entwässerer zum Führen dieses Wassers vorgesehen. Der Entwässerer ist dabei als vom Kraftstofffilter separate Baugruppe ausgebildet.

Die Erfindung beschäftigt sich mit dem Problem, für einen Kraftstofffilter der gattungsgemäßen Art eine verbesserte oder zumindest eine andere Ausführungsform anzugeben, welche eine besonders einfache und effektive Abscheidung von im abgeschiedenen Wasser noch enthaltenen Kraftstoffanteilen ermöglicht.

Gelöst wird dieses Problem durch ein Kraftstofffilter mit sämtlichen Merkmalen des Patentanspruchs 1. Vorteilhafte und zweckmäßige Ausgestaltungen sind Gegenstand der abhängigen Unteransprüche.

Die Erfindung beruht auf dem allgemeinen Gedanken, im Unterschied zu herkömmlichen Lösungen, welche die Kohlenwasserstoffe physikalisch mit Hilfe eines Filters aus dem abgeschiedenen Wasser trennen, die Kohlenwasserstoffe nunmehr zu adsorbieren und dadurch aus dem abgeschiedenen Wasser herauszutrennen. Hierzu weist ein Entwässerer, der zum Abführen des abgeschiedenen Wassers aus dem Kraftstofffilter dient, einen Kohlenwasserstoff-Adsorber auf, der in der Lage ist, die in dem abgeschiedenen Wasser mitgeführten Kohlenwasserstoffe an seiner inneren Oberfläche anzulagern, das heißt zu adsorbieren. Dabei gilt der Grundsatz, je größer die innere Oberfläche des Adsorbens ist, umso größer ist die Adsorbtionswirkung beziehungsweise Adsorbtionsfähigkeit und umso größer ist die reinigende Wirkung des Kohlenwasserstoff-Adsorbers. Derartige Kohlenwasserstoff-Adsorber können heutzutage kostengünstig und in nahezu beliebiger Form hergestellt werden und gewährleisten je nach Größe ihrer inneren Oberfläche beziehungsweise je nach Durchströmungsgeschwindigkeit eine hohe Adsorbtionsfähigkeit und damit eine große Reinigungswirkung, die auf jeden Fall ausreicht, das durch den Adsorber gereinigte Wasser unbedenklich in die Umgebung ablassen zu können. Erfindungsgemäß list dabei zwischen einem Sammelraum für abgeschiedenes Wasser und dem Entwässerer ein erstes schaltbares Ventil angeordnet, welches periodisch oder in Abhängigkeit des Füllgrades des Sammelraumes schaltbar ausgebildet ist und dadurch den Ablass von abgeschiedenem Wasser aus dem Sammelraum steuert. Stromab des Kohlenwasserstoff-Adsorbers ist ein zweites schaltbares Ventil angeordnet ist, welches in Abhängigkeit vom ersten Ventil schaltbar ausgebildet ist und dadurch eine Verweildauer von mit Kohlenwasserstoffen verunreinigtem Wasser im Kohlenwasserstoff-Adsorber steuert. Dabei sind das erste Ventil und das zweite Ventil zum Schalten über entsprechende elektrische Leitungen mit einer Steuereinrichtung verbunden. Zusätzlich ist eine Kraftstoffpumpe so ausgebildet ist, dass sie zum druckbeaufschlagten Ablassen des abgeschiedenen Wassers einschaltbar ist.

Zweckmäßig ist der Kohlenwasserstoff-Adsorber Aktivkohle oder weist zumindest solche auf. Aktivkohle ist eine feinkörnige Kohle mit extrem großer Oberfläche und einer stark porösen Struktur. Ihre Adsorbtionsfähigkeit ist daher besonders hoch und insbesondere für Kohlenwasserstoffe besonders ausgeprägt, wodurch sie bereits in Filteranlagen, beispielsweise in Abluftfiltern von Tankanlagen, bereits weit verbreitet eingesetzt wird. Zudem ist Aktivkohle in nahezu beliebiger Form herstellbar und darüber hinaus kostengünstig, wodurch eine im Vergleich zum Stand der Technik preiswerte und wirkungsvolle Trennung der im abgeschiedenen Wasser verbliebenen Kohlenwasserstoffanteile erreicht werden kann.

Ein vorteilhaftes, nachstehend näher erläutertes Ausführungsbeispiel ist in der Zeichnung schematisch dargestellt.

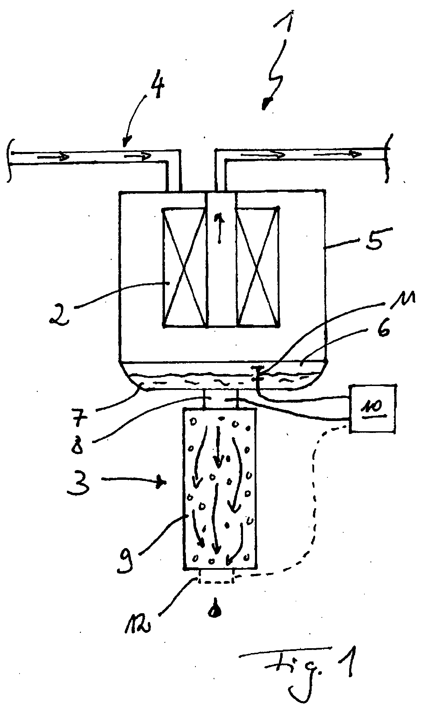

Dabei zeigt die einzige Fig. 1 eine Schnittdarstellung des erfindungsgemäßen Kraftstofffilters.

Entsprechend Fig. 1 weist ein erfindungsgemäßes Kraftstofffilter 1 ein Filterelement 2 sowie einen Entwässerer 3 auf. Der Entwässerer 3 kann dabei entweder als Einheit zusammen mit dem Kraftstofffilter 1 oder als davon separate Baugruppe ausgebildet sein. Das Kraftstofffilter 1 ist in üblicher Weise an eine Kraftstoffleitung 4 angeschlossen und zum Abscheiden von Partikeln und Wasser 7 aus einem durch den Kraftstofffilter 1 strömenden Kraftstoffstrom ausgebildet. Das Filterelement 2 kann dabei als Filterpatrone ausgebildet sein und darüber hinaus mit einem Gehäuse 5 des Kraftstofffilters 1 derart lösbar verbunden sein, dass es leicht ausgetauscht werden kann.

Unterhalb des Filterelementes 2 ist ein Sammelraum 6 zum Sammeln von aus dem Kraftstoffstrom abgeschiedenen Wasser 7 angeordnet. An einem Tiefpunkt des Sammelraums 6 ist ein Auslass mit einem schaltbaren ersten Ventil 8 angeordnet, welches in geöffnetem Zustand den Sammelraum 6 mit dem stromab des Sammelraumes 6 gelegenen Entwässerer 3 kommunizierend verbindet. Der Entwässerer 3 weist dabei erfindungsgemäß einen Kohlenwasserstoff-Adsorber 9 zur Adsorbtion von im abgeschiedenen Wasser 7 mitgeführten Kohlenwasserstoffen auf. Bei geöffnetem erstem Ventil 8 strömt somit das im Sammelraum 6 gesammelte und aus dem Kraftstoff abgeschiedene Wasser 7 durch den Kohlenwasserstoff-Adsorber 9, in welchem die im Wasser 7 verbliebenen Kohlenwasserstoffanteile herausgefiltert werden. Das nunmehr gereinigte Wasser 7 kann stromab des Kohlenwasserstoff-Adsorbers 9 in die Umgebung abgelassen werden.

Vorzugsweise ist dabei der Kohlenwasserstoff-Adsorber Aktivkohle oder weist zumindest solche auf. Aktivkohle besteht überwiegend aus Kohlenstoff (zumeist > 90%) mit einer stark porösen Struktur. Darüber hinaus beträgt eine innere Oberfläche der Aktivkohle zwischen 500 und 2.000 m²/g Kohle, worin die hohe Adsorbtionsfähigkeit der Aktivkohle begründet liegt. Vorzugsweise ist dabei der Kohlenwasserstoff-Adsorber 9 so ausgebildet, dass das diesen durchströmende Wasser 7 möglichst lang im Kohlenwasserstoff-Adsorber 9 verweilt, so dass möglichst viele Kohlenwasserstoffanteile aus dem abgeschiedenen Wasser 7 an der Aktivkohle beziehungsweise am Kohlenwasserstoff-Adsorber 9 angelagert werden können. Dabei kann die Adsorbtionsfähigkeit als Kenngröße für eine Filterwirkung des Kohlenwasserstoff-Adsorbers 9 verwendet werden. Selbstverständlich können als Kohlenwasserstoff-Adsorber 9 auch andere Adsorptionsmittel, wie zum Beispiel Zeolithe, Metal-Organic-Frameworks oder andere unpolare Adsorbentien verwendet werden.

Das zwischen dem Sammelraum 6 für abgeschiedenes Wasser 7 und dem Entwässerer 3 angeordnete erste, schaltbare Ventil 8 ist dabei periodisch oder in Abhängigkeit des Füllgrades des Sammelraumes 6 schaltbar ausgebildet und kann dadurch den Ablass von abgeschiedenem Wasser 7 aus dem Sammelraum 6 steuern. Hierbei ist denkbar, dass das Ventil 8 über eine Steuerungseinrichtung 10 periodisch, das heißt in bestimmten Zeitabständen geöffnet beziehungsweise geschlossen wird.

Wird das erste Ventil 8 in Abhängigkeit des Füllgrades des Sammelraums 6 geschaltet, so ist zur Ermittlung dieses Füllgrades vorzugsweise ein Wasserstandssensor 11 vorgesehen, der so ausgebildet ist, dass er einen jeweils im Sammelraum 6 herrschenden Füllgrad an die Steuereinrichtung 10 übermittelt. Denkbar ist hierbei, dass der Wasserstandssensor 11 beispielsweise als "two-level"-Sensor ausgebildet ist, welcher zumindest zwei Füllgrade des Sammelraumes 6 detektiert und diese der Steuereinrichtung 10 übermittelt. Denkbar ist selbstverständlich auch, dass zwei Wasserstandssensoren 11 vorgesehen sind, wovon der eine einen oberen und der andere einen unteren Füllgrad des Sammelraumes 6 detektiert und an die Steuereinrichtung 10 übermittelt. Erreicht der Füllgrad des Sammelraums 6 einen oberen Grenzwert, so wird ein Signal vom Wasserstandssensor 11 an die Steuereinrichtung 10 übermittelt, welche daraufhin das erste Ventil 8 öffnet, so dass Wasser 7 in den Entwässerer 3 beziehungsweise durch den Kohlenwasserstoff-Adsorber 9 hindurchströmen kann. Dabei bleibt das erste Ventil 8 vorzugsweise so lange geöffnet, bis der Füllgrad im Sammelraum 6 einen unteren Grenzwert erreicht, woraufhin der Wasserstandssensor 11 ein entsprechendes Signal an die Steuereinrichtung 10 übermittelt, die daraufhin das erste Ventil 8 schließt.

In Fig. 1 ist dabei der Wasserstandssensor 11 im Bereich eines Bodens des Sammelraumes 6 angeordnet, wobei auch denkbar ist, dass der Wasserstandssensor 11 von oben durch das Filterelement 2 in den Sammelraum 6 eintaucht.

Generell kann der Kohlenwasserstoff-Adsorber 9 so groß ausgebildet sein, dass er dieselbe Lebensdauer aufweist wie das Kraftstofffilter 1 oder aber er ist leicht austauschbar, beispielsweise über eine Schraubverbindung, mit dem Kraftstofffilter 1 verbunden, so dass er mit geringem Wartungsaufwand bei Bedarf leicht ausgetauscht werden kann. Dabei soll die Lebensdauer auf ca. 1 bis 1,5 Mio. Kilometer bzw. 15 Jahre ausgelegt sein, sofern die vom Bauraum her möglich ist. Ist der hierfür erforderliche Bauraum nicht vorhanden, so soll ein Austausch des Kohlenwasserstoff-Adsorbers 9 vorzugsweise in einem n-fachen Filterwechsel-Intervall erfol"gen.

Stromab des Kohlenwasserstoff-Adsorbers 9 ist gemäß der Fig. 1 ein zweites, schaltbares Ventil 12 angeordnet, welches in Abhängigkeit vom ersten Ventil 8 schaltbar ausgebildet ist. Die Anordnung des zweiten Ventils 12 hat dabei den großen Vorteil, dass eine Verweildauer des Wassers 7 im Kohlenwasserstoff-Adsorber 9 verlängert werden kann, da ein Abfließen des Wassers 7 aus dem Kohlenwasserstoff-Adsorber 9 bei geschlossenem Ventil 12 verhindert wird. Da sich eine hohe Verweildauer des Wassers 7 im Kohlenwasserstoff-Adsorber 9 positiv auf die Reinigung des Wassers 7 auswirkt, kann ein derartiges zweites Ventil 12 den Reinigungsgrad deutlich erhöhen, wodurch eine Umweltbelastung durch noch im Wasser 7 enthaltene Kohlenwasserstoffanteile weiter reduziert werden kann. Dabei können das erste Ventil 8 und/oder das zweite Ventil 12 beispielsweise als Magnetventile ausgebildet sein und zum Schalten über entsprechende elektrische Leitungen mit der Steuereinrichtung 10 verbunden sein. Generell dient das zweite Ventil 12 auch als zusätzliche Sicherung dafür, dass das erste Ventil 8 nicht sicher schließt. Das erste und das zweite Ventil 8, 12 bilden somit ein redundantes System.

Wie in Fig. 1 gezeigt, ist der Entwässerer 3 unterhalb des Filterelementes 2 beziehungsweise unten am Kraftstofffilter 1 angeordnet, so dass ein druckloses Ablassen des abgeschiedenen Wassers 7 allein durch die Schwerkraft erfolgen kann. Denkbar ist aber auch, dass bei einer alternativen anderen Anordnung des Entwässerers 3 bezüglich des Filterelements 2 zum Ablassen des abgeschiedenen Wassers eine nicht gezeigte Kraftstoffpumpe eingeschalten wird und dadurch ein druckbeaufschlagtes Ablassen des abgeschiedenen Wassers 7 erfolgt.

Generell sollte bei allen möglichen Ausführungsformen eine möglichst lange Verweildauer des abgeschiedenen Wassers 7 im Kohlenwasserstoff-Adsorber 9 angestrebt werden, wobei dies entweder durch eine entsprechende geometrische Ausbildung des Kohlenwasserstoff-Adsorbers 9 und/oder durch das oben beschriebene zweite Ventil 12 erreicht werden kann.

## Patentansprüche

1. Kraftstofffilter (1) mit
- einem Filterelement (2) zum Abscheiden von Partikeln und Wasser aus einem durch den Kraftstofffilter (1) strömenden Kraftstoffstrom,
- einem Sammelraum (6) zum Sammeln des abgeschiedenen Wassers (7) und
- einem Entwässerer (3) zum Abführen des abgeschiedenen Wassers (7) aus dem Kraftstofffilter (1), wobei der Entwässerer (3) als Einheit mit dem Kraftstofffilter (1) oder als davon separate Baugruppe ausgebildet ist,
- wobei der Entwässerer (3) einen Kohlenwasserstoff-Adsorber (9) zur Adsorption von in dem abgeschiedenen Wasser (7) mitgeführten Kohlenwasserstoffen aufweist,
**dadurch gekennzeichnet,**
- **dass** zwischen dem Sammelraum (6) für abgeschiedenes Wasser und dem Entwässerer (3) ein erstes schaltbares Ventil (8) angeordnet ist, welches periodisch oder in Abhängigkeit des Füllgrades des Sammelraums (6) schaltbar ausgebildet ist und dadurch den Ablass von abgeschiedenem Wasser aus dem Sammelraum (6) steuert,
- **dass** stromab des Kohlenwasserstoff-Adsorbers (9) ein zweites schaltbares Ventil (12) angeordnet ist, welches in Abhängigkeit vom ersten Ventil (8) schaltbar ausgebildet ist und dadurch eine Verweildauer von mit Kohlenwasserstoffen verunreinigtem Wasser (7) im Kohlenwasserstoff-Adsorber (9) steuert,
- **dass** das erste Ventil (8) und das zweite Ventil (12) zum Schalten über entsprechende elektrische Leitungen mit einer Steuereinrichtung (10) verbunden sind,
- **dass** eine Kraftstoffpumpe vorgesehen ist, die derart ausgebildet ist, dass sie zum druckbeaufschlagten Ablassen des abgeschiedenen Wassers (7) einschaltbar ist.

2. Kraftstofffilter nach Anspruch 1,
**dadurch gekennzeichnet,**
- **dass** der Kohlenwasserstoff-Adsorber (9) Aktivkohle ist oder solche aufweist, oder
- **dass** der Kohlenwasserstoff-Adsorber (9) Zeolithe, Metal-Organic-Framework oder unpolare Adsorbentien aufweist.

3. Kraftstofffilter nach Anspruch 1 oder 2,
**dadurch gekennzeichnet,**
**dass** ein Wasserstandssensor (11) zur Ermittlung eines Füllgrades des Sammelbehälters (6) vorgesehen ist, wobei der Wasserstandssensor (11) so ausgebildet ist, dass er in Abhängigkeit des Füllgrades des Sammelraums (6) zumindest das zwischen dem Kraftstofffilter (1) und dem Entwässerer (3) gelegene erste Ventil (8) öffnet und schließt und dadurch den Ablass von abgeschiedenem Wasser (7) aus dem Sammelraum (6) steuert.

4. Kraftstofffilter nach Anspruch 3,
**dadurch gekennzeichnet,**
**dass** der Wasserstandssensor (11) als "two-level"-Sensor ausgebildet ist.

5. Kraftstofffilter nach einem der Ansprüche 1 bis 4,
**dadurch gekennzeichnet,**
- **dass** ein Vorrat an Kohlenwasserstoff-Adsorbens auf die Le- bensdauer des Kraftstofffilters (1) ausgerichtet ist, und/oder
- **dass** der Kohlenwasserstoff-Adsorber (9) austauschbar ausgebildet ist.

## Claims

1. A fuel filter (1), comprising
- a filter element (2) for separating particles and water out of a fuel stream flowing through the fuel filter (1),
- a collecting space (6) for collecting the separated water (7) and
- a dewatering device (3) for removing the separated water (7) from the fuel filter (1), such that the dewatering device (3) is designed as a unit together with the fuel filter (1) or as a separate module,
- the dewatering device (3) has a hydrocarbon adsorber (9) for adsorption of hydrocarbons entrained in the separated water (7),
**characterized in that**
- a first switchable valve (8), which is designed to be switchable either manually, periodically or as a function of the degree of filling of the collecting space (6), is arranged between the collecting space (6) for separated water and the dewatering device (3), thereby controlling the discharge of separated water out of the collecting space (6),
- a second switchable valve (12), which is designed to be switchable manually, periodically or as a function of a first valve (8) is provided downstream from the hydrocarbon adsorber (9) and thereby controls the dwell time of water (7) contaminated with hydrocarbons in the hydrocarbon absorber (9),
- the first valve (8) and the second valve (12) are connected to a control unit (10) for switching via corresponding electric lines,
- a fuel pump is provided, designed so that it can be switched for draining out the separated water (7) under the influence of pressure.

2. The fuel filter according to Claim 1, **characterized in that**
- the hydrocarbon adsorber (9) is or contains activated carbon, or
- the hydrocarbon adsorber (9) has zeolites, a metal organic framework or nonpolar adsorbents.

3. The fuel filter according to Claim 1 or 2,
**characterized in that**
a water level sensor (11) is provided for determining the degree of filling of the collecting tank (6), such that the water level sensor (11) is designed, so that it opens and closes at least the first valve (8) situated between the fuel filter (1) and the dewatering device (3) as a function of the degree of filling of the collecting space (6) and thereby controls the discharge of separated water (7) out of the collecting space (6).

4. The fuel filter according to Claim 3,
**characterized in that**
the water level sensor (11) is designed as a "two-level" sensor.

5. The fuel filter according to any one of Claims 1 to 4,
**characterized in that**
- a supply of hydrocarbon adsorbent is tailored to the lifetime of the fuel filter (1), and/or
- the hydrocarbon adsorber (9) is designed to be replaceable.

## Revendications

1. Filtre à carburant (1) comprenant
- un élément filtrant (2) servant à séparer des particules et de l'eau d'un flux de carburant parcourant le filtre à carburant (1),
- un compartiment collecteur (6) servant à collecter l'eau (7) séparée, et
- un purgeur (3) servant à évacuer l'eau (7) séparée du filtre à carburant (1), le purgeur (3) étant réalisé sous la forme d'une unité pourvue d'un filtre à carburant (1) ou sous la forme d'un module séparé de ce dernier,
- le purgeur (3) présentant un adsorbeur d'hydrocarbure (9) servant à l'adsorption d'hydrocarbures transportés dans l'eau (7) séparée,
**caractérisé en ce**
- **qu'**une première soupape (8) pouvant être commutée est disposée entre le compartiment collecteur (6) destiné à l'eau séparée et le purgeur (3), laquelle est réalisée de manière à pouvoir commuter périodiquement ou en fonction du niveau de remplissage du compartiment collecteur (6) et qui commande ce faisant l'évacuation de l'eau séparée en dehors du compartiment collecteur (6),
- en ce qu'une deuxième soupape (12) pouvant être commutée est disposée en aval de l'adsorbeur d'hydrocarbure (9), laquelle est réalisée de manière à pouvoir commuter en fonction de la première soupape (8) et commande ce faisant une durée de séjour de l'eau (7) polluée par des hydrocarbures dans l'adsorbeur d'hydrocarbure (9),
- en ce que la première soupape (8) et la deuxième soupape (12) sont reliées, par l'intermédiaire de lignes électriques correspondantes, à un dispositif de commande (10) aux fins de la commutation,
- en ce qu'une pompe à carburant est prévue, laquelle est réalisée de telle manière qu'elle peut être mise en service aux fins de l'évacuation sous l'action d'une pression de l'eau (7) séparée.

2. Filtre à carburant selon la revendication 1,
**caractérisé en ce**
- **que** l'adsorbeur d'hydrocarbure (9) est du charbon actif ou présente un charbon actif, ou
- en ce que l'adsorbeur d'hydrocarbure (9) présente des zéolithes, un cadre organométallique ou des adsorbants apolaires.

3. Filtre à carburant selon la revendication 1 ou 2,
**caractérisé en ce**
**qu'**un capteur de niveau d'eau (11) est prévu aux fins de la détermination d'un niveau de remplissage du réservoir collecteur (6), le capteur de niveau d'eau (11) étant réalisé de sorte qu'il ouvre et ferme, en fonction du niveau de remplissage du compartiment collecteur (6), au moins la première soupape (8) placée entre le filtre à carburant (1) et le purgeur (3) et commande ce faisant l'évacuation de l'eau (7) séparée en dehors du compartiment collecteur (6).

4. Filtre à carburant selon la revendication 3,
**caractérisé en ce**
**que** le capteur de niveau d'eau (11) est réalisé sous la forme d'un capteur « deux niveaux ».

5. Filtre à carburant selon l'une quelconque des revendications 1 à 4,
**caractérisé en ce**
- **qu'**un stock d'adsorbant d'hydrocarbure est adapté à la longévité du filtre à carburant (1),
et/ou
- en ce que l'adsorbeur d'hydrocarbure (9) est réalisé de manière à pouvoir être remplacé.
